# FASCICULE DE BREVET EUROPEEN

(11) **EP 3 252 987 B1**
(45) Date de publication et mention de la délivrance du brevet: **31.03.2021**
(21) Numéro de dépôt: 16198651.8
(22) Date de dépôt: 14.11.2016
(51) Int. Cl.: H04L 9/00, G06F 21/52, G06F 21/55

(54) **EXÉCUTION SÉCURISÉE D'UN ALGORITHME**
GESICHERTE AUSFÜHRUNG EINES ALGORITHMUS
SECURE EXECUTION OF AN ALGORITHM

(30) Priorité: 31.05.2016 FR 1654876
(43) Date de publication de la demande: 06.12.2017
(73) Titulaire: PROTON WORLD INTERNATIONAL N.V., 1831 Diegem (BE); STMICROELECTRONICS (ROUSSET) SAS, 13790 Rousset (FR)
(72) Inventeur: PEETERS, Michael, 1320 Tourinnes-La-Grosse (BE); MARINET, Fabrice, 13790 Chateauneuf Le Rouge (FR); MODAVE, Jean-Louis, 1340 Ottignies (BE); ROMAIN, Fabrice, 83560 Rians (FR)
(74) Mandataire: Cabinet Beaumont

(56) Documents cités:
- US-A1- 2013 159 791

## Description

### Domaine

La présente description concerne le domaine de l'exécution d'un algorithme et, plus particulièrement, une fonction de calcul de façon sécurisée.

### Exposé de l'art antérieur

Des circuits intégrés peuvent comprendre des circuits ou des données qui sont considérés comme sensibles au vu de la sécurité des données qu'ils traitent, comme des clés d'authentification, des signatures, etc., ou des algorithmes qu'ils utilisent, comme des algorithmes de chiffrement ou de déchiffrement. De telles informations ne doivent pas être communiquées ni être détectables par des tiers ou par des circuits non autorisés.

L'intégrité de l'exécution est donc primordiale afin notamment de se prémunir contre des attaques par injection de fautes qui perturbent le fonctionnement pour déduire des informations secrètes.

Une solution pour se protéger contre des attaques par injection de fautes consiste à prévoir deux dispositifs de traitement agencés pour fonctionner en parallèle sur les mêmes données d'entrée. En comparant les résultats générés par ces deux dispositifs, l'injection d'une faute peut être détectée. Cependant, une telle solution a un coût matériel relativement élevé.

Une solution alternative qui évite l'utilisation de deux dispositifs de traitement consiste à exécuter deux fois la fonction sensible en utilisant le même dispositif de traitement et avec les mêmes données d'entrée US2013159791 fait partie de l'art antérieur.

### Résumé

Il existe un besoin d'améliorer la protection de l'intégrité d'un calcul ou de l'exécution d'un programme ou algorithme.

Un mode de réalisation pallie tout ou partie des inconvénients des techniques connues de protection d'intégrité de l'exécution d'algorithmes.

Ainsi, un mode de réalisation prévoit un procédé d'exécution d'un algorithme, comportant les étapes suivantes :
réaliser une première exécution de l'algorithme par une unité de traitement ;
envoyer au moins un premier résultat pour écriture dans une mémoire à un circuit de gestion de mémoire ;
stocker ledit premier résultat dans une première zone de la mémoire volatile ;
réaliser une deuxième exécution de l'algorithme par ladite unité de traitement ;
envoyer au moins un deuxième résultat pour écriture dans la mémoire audit circuit ; et
appliquer, par ledit circuit, un traitement différent par rapport à la première exécution.

Selon un mode de réalisation, ledit traitement différent consiste à stocker ledit deuxième résultat dans une deuxième zone de la mémoire volatile différente de la première zone.

Selon un mode de réalisation, ledit traitement différent consiste à transformer une requête en écriture, émise par l'unité de traitement, en requête de lecture du premier résultat.

Selon un mode de réalisation, ledit circuit compare les deux résultats.

Un mode de réalisation prévoit un procédé pour détecter l'occurrence d'une attaque par injection de fautes pendant l'exécution d'un algorithme.

Un mode de réalisation prévoit un dispositif de calcul, comportant :
une unité de traitement ;
au moins une mémoire volatile ; et
un circuit de gestion de la mémoire volatile, adapté à mettre en oeuvre le procédé d'exécution d'un algorithme ci-dessus

L'invention est définie par les revendications ci-après.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un mode de réalisation d'un circuit électronique du type auquel s'appliquent, à titre d'exemple, les modes de réalisation décrits ;
la figure 2 est une représentation schématique illustrant un mode de réalisation d'une organisation d'une mémoire volatile du circuit de la figure 1 ;
la figure 3 est une représentation schématique illustrant un mode de réalisation d'une organisation d'une mémoire non volatile du circuit de la figure 1 ;
la figure 4 est un schéma-bloc illustrant un mode de réalisation d'un procédé d'exécution d'un algorithme ; et
la figure 5 est un schéma-bloc illustrant un autre mode de réalisation d'un procédé d'exécution d'un algorithme.

### Description détaillée

De mêmes éléments ont été désignés par de mêmes références aux différentes figures.

Par souci de clarté, seuls les étapes et éléments utiles à la compréhension des modes de réalisation qui vont être décrits ont été représentés et seront détaillés. En particulier, d'autres aspects, comme les fonctions de calcul particulières exécutées, n'ont pas été décrites en détail, puisqu'il sera clair pour l'homme de l'art que les modes de réalisation décrits ici peuvent s'appliquer à une grande gamme de fonctions de calcul, pour des applications cryptographiques ou d'autres types d'applications.

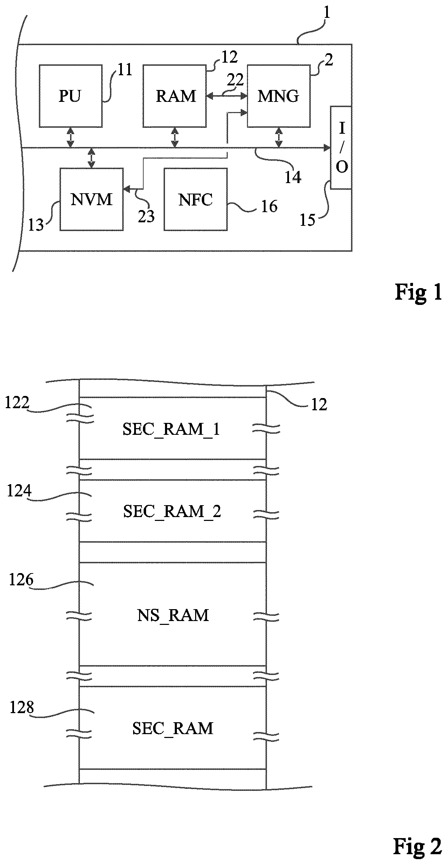

La figure 1 représente, de façon très schématique et sous forme de blocs, un mode de réalisation d'un circuit électronique 1 du type auquel s'appliquent, à titre d'exemple, les modes de réalisation qui vont être décrits.

Le circuit 1 comporte :
une unité de traitement 11 (PU), par exemple une machine d'états, un microprocesseur, un circuit logique programmable, etc. ;
une ou plusieurs zones 12 (RAM) de stockage volatile, par exemple de type mémoire RAM ou registres, pour stocker temporairement des informations (instructions, adresses, données) pendant les traitements ;
une ou plusieurs zones 13 (NVM) de stockage non volatile (par exemple de type flash) pour stocker des informations de façon durable et en particulier quand le circuit n'est pas alimenté ;
un ou plusieurs bus 14 de données, d'adresses et/ou de commandes entre les différents éléments internes au circuit 1 ; et
une interface d'entrée-sortie 15 (I/O) de communication, par exemple de type bus série, avec l'extérieur du circuit 1.

Le cas échéant, le circuit 1 intègre également un circuit 16 de communication sans contact (CLF - ContactLess Front-end), de type communication en champ proche (Near Field Communication - NFC).

Par ailleurs, le circuit 1 peut intégrer d'autres fonctions selon l'application, par exemple, un crypto-processeur, d'autres interfaces, d'autres mémoires, etc.

Les modes de réalisation décrits prévoient de vérifier l'intégrité d'exécution d'un algorithme en utilisant le principe d'une double exécution mais sans recourir nécessairement à deux exécutions identiques. De plus, on prévoit que ces exécutions s'effectuent de façon transparente pour l'unité de traitement.

Pour ce faire, on prévoit, dans le circuit 1, un circuit 2 (MNG) de gestion d'au moins une partie des mémoires 12 et 13. Ce circuit constitue un circuit d'interface mémoire par lequel transitent au moins toutes les adresses d'accès à des données dont on souhaite vérifier la valeur par une double exécution. En pratique, ces adresses sont localisées dans une plage d'adresses (mapping mémoire) et toutes les adresses de cette plage sont envoyées et interceptées par le circuit de gestion 2. La communication entre le circuit 2 et les mémoires 12 et 13 peut s'effectuer par l'intermédiaire des bus 14 et/ou par des liaisons dédiées 22, respectivement 23. En variante, le circuit 2 est intercalé entre le ou les bus et la ou les mémoires. Pour simplifier la description qui suit, on fait référence à une réalisation matérielle du circuit 2 de gestion des exécutions sécurisées mais on notera que cette gestion peut également être logicielle.

Par ailleurs, on prévoit une organisation particulière de la mémoire volatile 12 utilisée par le circuit 2.

La figure 2 est une représentation schématique illustrant un mode de réalisation d'une organisation de la mémoire volatile RAM du circuit 1.

Selon ce mode de réalisation, la mémoire RAM 12 est découpée en une partie sécurisée et une partie non sécurisée. Plus précisément, la partie sécurisée contient deux zones 122 (SEC_RAM_1) et 124 (SEC_RAM_2) destinées aux deux exécutions respectives, dites sécurisées, utilisées par le processus de vérification d'intégrité. La partie non sécurisée contient, par exemple, une zone 126 (NS_RAM) destinée à des données qui ne sont pas sensibles du point de vue de la sécurité. Le cas échéant, on prévoit une zone supplémentaire 128 (SEC_RAM) pour d'autres exécutions sécurisées. Les zones 126 et 128 ne sont pas affectées par les traitements opérés par les modes de réalisation décrits.

De préférence, le processus de vérification d'intégrité décrit par la suite agit dans la zone SEC_RAM. Le rôle des zones 122 et 124 est de donner une zone de mémoire propre à chaque exécution. Ces zones vont typiquement contenir des variables temporaires propres à chaque exécution. Par exemple, elles contiennent un masque aléatoire, appliqué à un index, pour parcourir un tableau de manière différente pour chaque exécution. Les deux exécutions vont stocker ce masque à une même adresse logique, mais par la virtualisation de la mémoire, c'est-à-dire traduction d'adresse par le circuit 2, cette donnée sera stockée à des adresses physiques différentes dans les zones 122 et 124.

Par ailleurs, côté mémoire non volatile NVM, on prévoit également une organisation particulière.

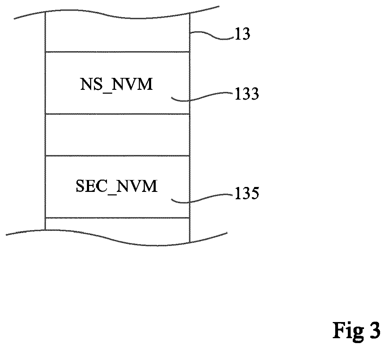

La figure 3 est une représentation schématique illustrant un mode de réalisation d'une organisation de la mémoire non volatile du circuit 1.

Selon ce mode de réalisation, on affecte une zone 133 (NS_NVM) de la mémoire à des données qui ne sont pas sensibles du point de vue de la sécurité, et une zone 135 de la mémoire non volatile 13 à des données dites sécurisées et qui sont destinées à contenir des données liées aux exécutions sécurisées (en pratique les résultats des exécutions sécurisées).

Selon les modes de réalisation décrits, on prévoit que, à l'appel par l'unité de traitement 11 d'un processus ou algorithme sécurisé, par exemple un calcul de signature, l'exécution d'un algorithme de chiffrement, etc., le circuit 2 intercepte les échanges depuis et vers l'unité de traitement 11 afin que les deux exécutions lancées par l'unité soient gérées différemment en mémoire.

L'unité de traitement PU est programmée pour lancer deux exécutions d'un même algorithme (d'un même calcul). Chaque exécution requiert un ou plusieurs accès en mémoire volatile et/ou non volatile.

Les accès en mémoire non volatile consistent, par exemple, à lire des informations devant être traitées par cette exécution. Selon les modes de réalisation décrits, les accès en mémoire non volatile, qu'ils concernent la première ou la seconde exécution, vont chercher les données dans la même zone (135, figure 3) de la mémoire 13.

Les accès en mémoire volatile sont, vu de l'unité de traitement 11, destinés à stocker, entre autres, le ou les résultats temporaires des calculs liés aux deux exécutions afin de pouvoir, en fin de deuxième exécution s'assurer de la cohérence entre ces deux exécutions. Selon les modes de réalisation décrits, l'unité de traitement 11 ne distingue pas les deux exécutions, c'est-à-dire, que les requêtes d'accès qu'elle émet sont indépendantes de l'exécution (typiquement, l'unité 11 envoie la même adresse mémoire. Toutefois, côté circuit 2, on distingue les deux exécutions afin, selon le cas, d'affecter une zone 122 ou 124 différente de la mémoire 12, ou de transformer la requête de l'unité de traitement).

Selon un autre exemple préféré, le circuit 2 agit à la fois comme unité de traduction des requêtes (par exemple, transformant un accès en écriture en un accès en lecture et vérification), et comme unité de gestion de mémoire virtuelle (Management Memory Unit - MMU), permettant d'avoir des adresses logiques vues par l'unité de traitement et des adresses physiques vues par la mémoire RAM et/ou NVM.

Pour simplifier la description des modes de réalisation qui suit, on suppose l'exécution d'une opération simple, consistant à incrémenter un compteur stocké en mémoire non volatile 13 (NVM), à stocker le résultat en mémoire volatile 12 (RAM), puis optionnellement à le transférer en mémoire non volatile. Par conséquent, les opérations successives de traitement d'une exécution par l'unité 11 sont :
- Lecture de la valeur C du compteur en mémoire non volatile (zone sécurisée 133) ;
- Incrémenter le compteur (C=C+1) ;
- Stocker (écrire) le résultat C en mémoire volatile (zone sécurisée) ; et/ou
- Transférer le résultat en mémoire non volatile (zone 133) .

Le transfert en mémoire non volatile n'est pas indispensable et dépend des processus exécutés. Par exemple, le processus peut générer une signature utilisant une clé asymétrique et générer une signature sur un challenge donné en entrée.

Selon un autre exemple, le processus est directement appliqué en mémoire NVM. Par exemple, le bloc NVM gère les écritures en mémoire flash, le processus de vérification consiste alors à écrire la nouvelle valeur en mémoire flash lors de la première exécution et à lire/vérifier depuis la mémoire flash lors de la deuxième exécution.

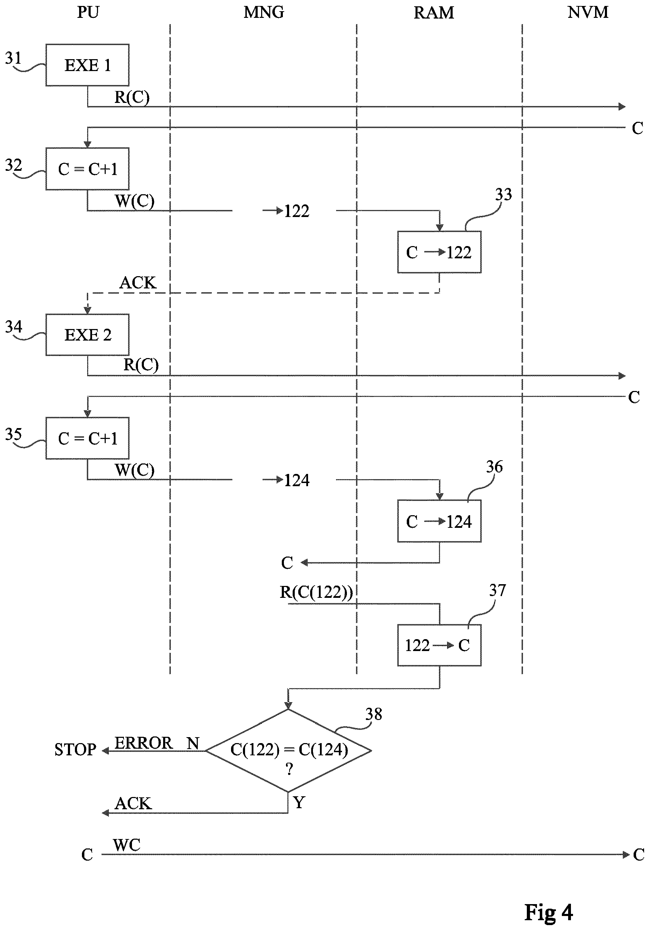

La figure 4 est un schéma-bloc illustrant un mode de réalisation d'un procédé d'exécution d'un algorithme en affectant une zone 122 ou 124 différente de la mémoire 12 selon l'exécution.

Selon ce mode de réalisation, le circuit 2 (MNG) aiguille les requêtes en écriture W et en lecture R dans la première zone 122 pour la première exécution et dans la deuxième zone 124 pour la deuxième exécution. Cet aiguillage, c'est-à-dire la conversion en des adresses mémoire différentes selon qu'il s'agit de la première ou de la deuxième exécution, est directement effectuée par le circuit 2.

Ainsi, lorsque l'unité PU effectue une première exécution (bloc 31, EXE1), elle commence par émettre une requête R(C) de lecture de la valeur du compteur C. Cette requête est interprétée par le circuit MNG mais n'est pas transformée, autrement que pour la conversion d'adresse logique en adresse physique en mémoire non volatile NVM. L'unité PU reçoit alors la valeur du compteur et l'incrémente (bloc 32, C=C+1). Elle envoie alors cette nouvelle valeur pour écriture W(C). Le circuit MNG intercepte cette requête et, s'il s'agit de la première exécution, convertit l'adresse logique fournie par l'unité PU en une adresse physique de la zone 122 de la mémoire RAM, stocke (bloc 33, C -> 122) la valeur C en mémoire volatile RAM (dans la zone 122) et, optionnellement (étape non indispensable illustrée en pointillées), retourne une confirmation ACK.

L'unité PU démarre alors la deuxième exécution (bloc 34, EXE2) de façon identique à la première. Par conséquent, dans l'exemple représenté, elle émet une requête R(C) de lecture de la valeur du compteur C. Comme pour la première exécution, cette requête est interprétée par le circuit MNG mais n'est pas transformée, autrement que pour la conversion d'adresse logique en adresse physique en mémoire non volatile NVM. L'unité PU reçoit alors la valeur du compteur et l'incrémente (bloc 35, C=C+1). Elle envoie alors de nouveau cette nouvelle valeur pour écriture W(C). Le circuit MNG intercepte cette requête et, comme il s'agit de la deuxième exécution (par exemple, au début du processus, un compteur ou drapeau est initialisé côté circuit MNG) convertit l'adresse logique fournie par l'unité PU en une adresse physique de la zone 124 de la mémoire RAM, stocke (bloc 36, C -> 124) la valeur C en mémoire volatile RAM (dans la zone 124) et retourne une confirmation ACK. Le circuit MNG provoque alors la lecture (R(C(122)) de la valeur C précédemment stockée dans la zone 122. Le résultat de la première exécution est lu en mémoire RAM (bloc 37, 122 -> C) et est retourné au circuit MNG. Ce dernier compare alors cette valeur à celle de la deuxième exécution (bloc 38, C(122)=C(124) ?). Si les valeurs sont identiques (sortie Y du bloc 38), le circuit MNG retourne une confirmation ACK à l'unité PU qui émet alors une requête en écriture W(C) du résultat C dans la mémoire non volatile. Sinon (sortie N du bloc 38), elle retourne un message d'erreur ERROR et l'unité de traitement PU met alors en oeuvre un traitement d'erreur, par exemple le traitement s'arrête STOP.

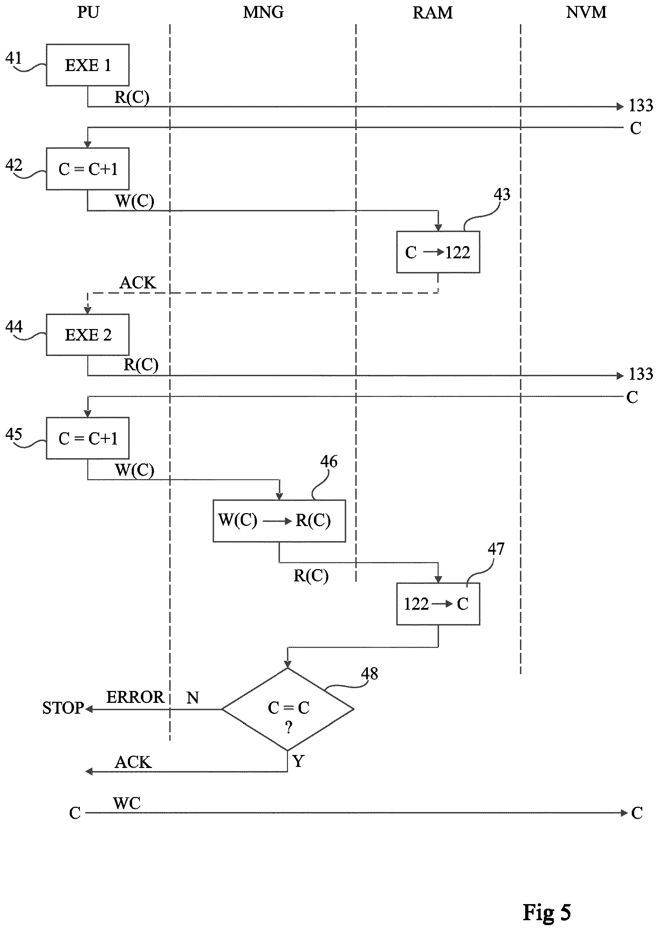

La figure 5 est un schéma-bloc illustrant un autre mode de réalisation préféré d'un procédé d'exécution d'un algorithme en transformant une requête d'accès en écriture émise par l'unité de traitement en une requête d'accès en lecture en mémoire volatile.

Ainsi, lorsque l'unité PU effectue une première exécution (bloc 41, EXE1), elle commence par émettre une requête R(C) de lecture de la valeur du compteur C. Cette requête est interprétée par le circuit MNG mais n'est pas transformée, autrement que pour la conversion d'adresse logique en adresse physique en mémoire non volatile NVM. L'unité PU reçoit alors la valeur du compteur et l'incrémente (bloc 42, C=C+1). Elle envoie alors cette nouvelle valeur pour écriture W(C). Le circuit MNG intercepte cette requête et, s'il s'agit de la première exécution, ne la transforme pas, autrement que pour la conversion d'adresse logique en adresse physique, et stocke (bloc 43, C -> 122) la valeur C en mémoire volatile RAM (par exemple, dans la zone 122) et, optionnellement (étape non indispensable illustrée en pointillés), retourne une confirmation ACK. Selon ce mode de réalisation, une seule zone parmi les zones 122 et 124 suffit.

L'unité PU démarre alors la deuxième exécution (bloc 44, EXE2) de façon identique à la première. Par conséquent, dans l'exemple représenté, elle émet une requête R(C) de lecture de la valeur du compteur C. Comme pour la première exécution, cette requête est interprétée par le circuit MNG mais n'est pas transformée, autrement que pour la conversion d'adresse logique en adresse physique en mémoire non volatile NVM. L'unité PU reçoit alors la valeur du compteur et l'incrémente (bloc 45, C=C+1). Elle envoie alors de nouveau cette nouvelle valeur pour écriture W(C). Le circuit MNG intercepte cette requête mais détecte qu'il s'agit de la deuxième exécution. Le circuit MNG transforme alors (bloc 46, W(C) -> R(C)) la requête en écriture W(C) en requête de lecture R(C) et envoie une requête de lecture R(C) de la valeur stockée en mémoire RAM issue de la première exécution. Le résultat de la première exécution est lu en mémoire RAM (bloc 47, 122 -> C) et est retourné au circuit MNG. Le circuit MNG compare alors cette valeur à celle reçue de l'unité PU (bloc 48, C=C ?). Si les valeurs sont identiques (sortie Y du bloc 48), le circuit MNG retourne une confirmation ACK à l'unité PU qui émet alors une requête en écriture W(C) du résultat C dans la mémoire non volatile. Sinon (sortie N du bloc 48), elle retourne un message d'erreur ERROR et l'unité de traitement met alors en oeuvre un traitement d'erreur, par exemple le traitement s'arrête STOP.

Ainsi, les deux exécutions sont, du point de vue de l'unité de traitement 11, identiques mais sont traitées différemment du point de vue mémoire. Un avantage est que le programme exécuté par l'unité de traitement PU reste identique. Par conséquent, cela simplifie les mises à jour éventuelles, les vérifications d'intégrité par calcul de signature du programme lors de son chargement depuis la mémoire non-volatile, etc.

Un autre avantage est de minimiser la taille du code programme nécessaire. En effet, il n'est ici pas nécessaire d'avoir un programme de vérification distinct du programme d'exécution.

On notera que les deux réalisations des figures 4 et 5 sont le plus souvent combinées, certaines données étant stockées temporairement dans une zone de mémoire RAM différente selon l'exécution tandis que d'autres (généralement les résultats) font l'objet d'une conversion d'écriture en lecture lors de la deuxième exécution.

Par ailleurs, ce qui a été décrit en relation avec une seule opération (incrément) se transpose en cas d'opérations multiples. Un algorithme au sens de la présente description peut être une seule opération, plusieurs opérations ou un programme plus complexe. En particulier, le stockage peut concerner une ou plusieurs opérations de l'algorithme. En outre, bien que l'on ait fait référence à deux zones d'une mémoire volatile, il peut s'agir de deux mémoires distinctes.

Divers modes de réalisation ont été décrits. Diverses variantes et modifications apparaîtront à l'homme de l'art. Enfin, la mise en oeuvre pratique des modes de réalisation qui ont été décrits est à la portée de l'homme du métier à partir des indications fonctionnelles données ci-dessus.

## Revendications

1. Procédé d'exécution d'un algorithme, comportant les étapes suivantes :
réaliser (31, 41) une première exécution (EXE1) de l'algorithme par une unité de traitement (11) ;
envoyer au moins un premier résultat pour écriture dans une mémoire (12) à un circuit de gestion de mémoire (2) ;
stocker (33, 43) ledit premier résultat dans une première zone (122) de la mémoire volatile ;
réaliser (34, 44) une deuxième exécution (EXE2) de l'algorithme différente de la première exécution, par ladite unité de traitement ;
envoyer au moins un deuxième résultat pour écriture dans la mémoire (12) audit circuit ;
appliquer (36, 37, 38 ; 46, 47, 48), par ledit circuit, un traitement différent par rapport à la première exécution, ledit traitement différent consistant au moins à transformer (48) une requête en écriture (W), émise par l'unité de traitement (11), en requête de lecture (R) du premier résultat ; et
comparer les deux résultats, ledit circuit retournant, si les valeurs sont identiques, une confirmation à l'unité qui émet alors une requête en écriture du résultat dans une mémoire non volatile et, sinon, un message d'erreur.

2. Procédé selon la revendication 1, dans lequel ledit traitement différent consiste en outre à stocker (36) ledit deuxième résultat dans une deuxième zone (124) de la mémoire volatile (12) différente de la première zone (122).

3. Procédé selon la revendication 1 ou 2, dans lequel ledit circuit (2) compare (38, 48) les deux résultats.

4. Procédé pour détecter l'occurrence d'une attaque par injection de fautes pendant l'exécution d'un algorithme comprenant le procédé de l'une quelconque des revendications 1 à 3.

5. Dispositif (1) de calcul, comportant :
une unité de traitement (11) ;
au moins une mémoire volatile (12) ; et
un circuit (2) de gestion de la mémoire volatile, adapté à mettre en oeuvre le procédé selon l'une quelconque des revendications 1 à 3.

## Patentansprüche

1. Verfahren zur Ausführung eines Algorithmus, das die folgenden Schritte aufweist:
Ausführen (31, 41) einer ersten Ausführung (EXE1) des Algorithmus durch eine Verarbeitungseinheit (11);
Senden mindestens eines ersten in einen Speicher (12) zu schreibenden Ergebnisses an eine Speicherverwaltungsschaltung (2);
Speichern (33, 43) des ersten Ergebnisses in einen ersten Bereich (122) des flüchtigen Speichers;
Ausführen (34, 44) einer zweiten Ausführung (EXE2) des Algorithmus, die sich von der ersten Ausführung unterscheidet, durch die Verarbeitungseinheit;
Senden mindestens eines zweiten in den Speicher (12) zu schreibenden Ergebnisses an die Schaltung;
Anwenden (36, 37, 38; 46, 47, 48) einer anderen Verarbeitung als bei der ersten Ausführung durch die Schaltung, wobei die andere Verarbeitung mindestens darin besteht, eine von der Verarbeitungseinheit (11) übertragene Schreibanforderung (W) in eine Leseanforderung (R) des ersten Ergebnisses umzuwandeln (48); und
Vergleichen der beiden Ergebnisse, wobei die Schaltung, wenn die Werte identisch sind, eine Bestätigung an die Einheit zurückgibt, die dann eine Schreibanforderung des Ergebnisses in einem nichtflüchtigen Speicher ausgibt und anderenfalls eine Fehlermeldung ausgibt.

2. Verfahren nach Anspruch 1, wobei die andere Verarbeitung das Speichern (36) des zweiten Ergebnisses in einen zweiten Bereich (124) des flüchtigen Speichers (12) aufweist, der sich von dem ersten Bereich (122) unterscheidet.

3. Verfahren nach Anspruch 1 oder 2, wobei die Schaltung (2) die beiden Ergebnisse vergleicht (38, 48).

4. Verfahren zum Erkennen des Auftretens eines Fehlerinjektionsangriffs während der Ausführung eines Algorithmus, das das Verfahren nach einem der Ansprüche 1 bis 3 aufweist.

5. Rechenvorrichtung (1), die Folgendes aufweist:
eine Verarbeitungseinheit (11);
mindestens einen flüchtigen Speicher (12); und
eine Verwaltungsschaltung (2) für einen flüchtigen Speicher, die in der Lage ist, das Verfahren nach einem der Ansprüche 1 bis 3 auszuführen.

## Claims

1. An algorithm execution method, comprising the steps of:
carrying out (31, 41) a first execution (EXE1) of the algorithm by a processing unit (11);
sending at least one first result to be written into a memory (12) to a memory management circuit (2);
storing (33, 43) said first result into a first area (122) of the volatile memory;
carrying out (34, 44) a second execution (EXE2) of the algorithm, different from the first execution, by said processing unit;
sending at least one second result to be written into the memory (12) to said circuit;
applying (36, 37, 38; 46, 47, 48), by means of said circuit, a different processing than in the first execution, said different processing consisting at least in transforming (48) a write request (W), transmitted by the processing unit (11), into a request (R) for reading the first result; and
comparing the two results, the circuit returning, if the values are identical, a confirmation to the unit, which then emits a writing request of the result in a non-volatile memory and, if not, an error message.

2. The method of claim 1, wherein said different processing comprises storing (36) said second result into a second area (124) of the volatile memory (12) different from the first area (122).

3. The method of claim 1 or 2, wherein said circuit (2) compares (38, 48) the two results.

4. A method for detecting the occurrence of a fault injection attack during the execution of an algorithm comprising the method of any of claims 1 to 3.

5. A calculation device (1), comprising:
a processing unit (11);
at least one volatile memory (12); and
a volatile memory management circuit (2) capable of implementing the method of any of claims 1 to 3.
